# FASCICULE DE BREVET EUROPEEN

(11) **EP 2 509 923 B1**
(45) Date de publication et mention de la délivrance du brevet: **29.04.2015**
(21) Numéro de dépôt: 10801640.3
(22) Date de dépôt: 08.12.2010
(51) Int. Cl.: C03C 17/42, C04B 41/52, C04B 41/89

(54) **SUBSTRAT HYDROPHOBE COMPRENANT UN DOUBLE PRIMAGE ET PROCEDE DE FABRICATION**
HYDROPHOBES SUBSTRAT MIT DOPPELGRUNDIERUNG UND VERFAHREN ZUR HERSTELLUNG
HYDROPHOBIC SUBSTRATE INCLUDING DOUBLE PRIMING AND METHOD OF MANUFACTURING

(30) Priorité: 10.12.2009 FR 0958841
(43) Date de publication de la demande: 17.10.2012
(73) Titulaire: Saint-Gobain Glass France, 92400 Courbevoie (FR)
(72) Inventeur: CLABAU, Frédéric, F-75013 Paris (FR); CAPDEVILLE, Stéphanie, F-31000 Toulouse (FR); MELCHER, Martin, 52134 Herzogenrath (DE)
(74) Mandataire: Lucas, Francois
(86) Numéro de dépôt international: PCT/FR2010/052641
(87) Numéro de publication internationale: WO 2011/070293

(56) Documents cités:
- EP-A1- 1 142 845
- WO-A2-2007/012779
- FR-A1- 2 781 495

## Description

La présente invention concerne un substrat hydrophobe, notamment constitué d'un matériau verrier, d'une céramique, d'une vitrocéramique etc. Les vitrages selon l'invention sont préférentiellement des vitrages en verre. Ils sont utilisés, en particulier, dans le domaine aéronautique, ferroviaire ou automobile. Ils peuvent aussi être utilisés dans le domaine du bâtiment ou dans le domaine de l'aménagement intérieur comme, par exemple, des panneaux décoratifs, l'ameublement, l'électroménager (portes de réfrigérateurs ou de fours, vitrines) etc.

Ce type de traitement vise de manière connue à donner au substrat le caractère de non-mouillabilité, appelé anti-pluie dans certains domaines.

Par mouillabilité, on désigne la propriété selon laquelle des liquides polaires ou non polaires adhèrent sur le substrat en formant un film. Cette adhérence est également valable pour les poussières ou salissures de toutes natures (traces de doigts, insectes, etc). La présence d'eau et/ou de salissures est gênante, en particulier pour un substrat transparent du type vitrage, notamment utilisé dans le domaine du transport.

La propriété de non-mouillabilité d'un substrat, plus communément désignée hydrophobie, est caractérisée par un angle de contact entre l'eau et ce substrat élevé. De manière connue, l'angle de contact, lorsqu'une goutte d'eau est déposée sur une surface solide plane, est défini comme l'angle formé entre la tangente à la goutte au point de contact et ladite surface solide. Dans le cadre de la présente invention, le substrat est considéré comme présentant des propriétés hydrophobes lorsque ledit angle de contact est initialement supérieur à 90°, de préférence supérieur à 100°.

Lorsque le substrat présente de telles propriétés d'hydrophobie, le liquide a alors tendance à s'écouler aisément, sous forme de gouttes, sur le substrat, par simple gravité si le substrat est incliné, ou sous l'effet de forces aérodynamiques dans le cas d'un véhicule en mouvement. Des agents connus pour conférer cette propriété d'hydrophobie sont par exemple des alkylsilanes fluorés tels que décrits dans les demandes de brevets EP 0 492 417, EP 0 492 545 et EP 0 672 779. Selon ces documents, la couche hydrophobe peut être obtenue en appliquant sur la surface d'un substrat une solution contenant des organosilanes fluorés dans un solvant organique. Comme solvant organique, le document EP 0 492 545 cite, en particulier, du n-hexadécane, du toluène, du xylène, etc. Ces solvants sont particulièrement appropriés pour un chlorosilane fluoré. Il est également possible, selon ce document, d'utiliser un alcool méthylique ou éthylique comme solvant.

Des agents hydrophobes courants sont, en particulier, des alkylsilanes dont le groupe alkyle comporte au moins une extrémité perfluorée, c'est-à-dire consistant en un groupement F₃C-(CF₂)ₙ-, dans lequel n est un nombre entier positif ou nul.

L'un des problèmes se posant avec le plus d'acuité dans le domaine de l'invention est tout d'abord celui de l'abrasion du revêtement hydrophobe. Cette abrasion se produit plus ou moins au cours des opérations de nettoyage du substrat, périodiquement indispensables en particulier pour restaurer une vision satisfaisante à travers un substrat transparent. On cherche ainsi constamment à ralentir l'élimination progressive des revêtements hydrophobes de types précités, qui se produit notamment sous l'action d'essuie-glaces dans le cas d'un pare-brise automobile. Une telle élimination peut aussi résulter d'une dégradation par le rayonnement ultraviolet ou par des attaques hydrolytiques.

Il est connu de la demande EP 0 492 545 A2 précitée d'accroître l'adhésion du revêtement hydrophobe en soumettant le substrat à un traitement de primage avant d'appliquer lé revêtement. Ce traitement consiste à former une fine couche intermédiaire à partir d'agents dits de primage ou primaires, qui sont des composés du silicium ayant au moins deux fonctions hydrolysables. De façon bien connue, l'une des deux fonctions hydrolysables permet la liaison chimique au substrat par un atome d'oxygène lié à l'atome de silicium, la seconde fonction hydrolysable permettant la fixation de l'agent hydrophobe. Sont mentionnés dans la demande EP 0 492 545 A2, en tant qu'agents de primage, les composés SiCl₄, SiHCl₃, SiH₂Cl₂ et Cl-(SiCl₂O)ₙSiCl₃, n étant un entier compris entre 1 et 4.

Le brevet EP 944 687 décrit plus particulièrement des revêtements anti-pluie élaborés par voie liquide et comportant une sous-couche ou couche de primage obtenue à partir d'un précurseur du type Si(OEt)₄ ou SiCl₄ et une couche fonctionnelle à base de perfluoroalkylsilane.

Afin d'améliorer encore les propriétés de résistance hydrolytique du revêtement hydrophobe, le brevet EP 1 102 825 décrit une composition pour un revêtement hydrophobe intégrant dans une même couche à la fois un alkylsilane fluoré et un bis-silane.

La demande WO 2007/012779 décrit alternativement un revêtement hydrophobe constitué par une première couche de primage du type bis-silane et une couche à propriétés hydrophobes incorporant un alkylsilane fluoré.

Si de tels revêtements permettent d'obtenir des performances en conformité avec la grande majorité des spécifications UV et mécaniques actuelles, leur inertie chimique est encore trop faible et constitue donc actuellement un facteur limitant leur expansion. Il est notamment nécessaire que leur résistance à la corrosion saline soit encore améliorée, notamment pour leur permettre de satisfaire aux spécifications de plus en plus sévères exigées par les constructeurs automobiles.

En particulier, les essais menés par la demanderesse ont démontré que dans la majorité des cas, de tels revêtements remplissaient difficilement le cahier des charges imposé en la matière par les constructeurs automobiles tel que mesuré notamment par le test de résistance au Brouillard Salin Neutre (BSN) selon la norme NF ISO 9227. Ainsi, les revêtements décrits dans les demandes EP 944 687 et EP 1 102 825, dont les performances de résistance aux UV et de résistance mécanique sont apparues satisfaisantes, présentent des performances insuffisantes à la corrosion saline, telle que mesurée par le test BSN. Cette insuffisance pourrait limiter leur développement, en particulier sur le marché asiatique où les normes sont les plus sévères dans ce domaine.

La présente invention a ainsi pour principal objet des revêtements résistant non seulement à l'abrasion et aux rayonnements UV mais présentant en outre une importante inertie chimique, c'est-à-dire une inertie chimique leur permettant de remplir les cahiers des charges imposés à l'heure actuelle par l'industrie automobile, notamment en termes de corrosion saline. Il faut noter que Les substrats comprenant les revêtements selon l'invention présentent des performances sensiblement égales ou supérieures à celles des substrats hydrophobes connus à cette date en ce qui concerne les autres spécifications nécessaires à leurs différentes utilisations, notamment les propriétés initiales d'hydrophobie, la tenue mécanique ou la tenue UV.

Plus précisément la présente invention se rapporte tout d'abord à un procédé d'obtention d'un revêtement hydrophobe sur un substrat verrier, céramique, ou vitrocéramique, de préférence verrier, ledit procédé se caractérisant en ce qu'il comprend :
a) une première étape consistant à déposer sur ledit substrat une première couche de primage du matériau SiO₂ comprenant éventuellement un élément du groupe constitué par Al, B, C ou Zr, la densité de ladite couche étant d'au moins 1,9 g/cm³ et de préférence d'au moins 2,0 g/cm³,
b) une deuxième étape consistant à appliquer sur ladite couche de primage dense une deuxième couche de primage obtenue à partir d'un agent de primage du type bis-silane et de formule :

   **(X¹)_{3-q}(R¹)_{q}Si-R³-Si(X²)_{3-q'}(R²)_{q'}**

   dans laquelle
   - Si est le silicium;
   - R³ représente une chaîne carbonée linéaire, ramifiée, ou aromatique, de préférence linéaire, dans lequel le nombre de carbones établissant la liaison entre les deux atomes de silicium est inférieur à 6 et de préférence est compris entre 1 et 4, bornes incluses;
   - R¹ et R² représentent chacun un groupe alkyle ou un atome d'hydrogène ;
   - X¹ et X² sont des groupements hydrolysables notamment choisis parmi -Cl, -OCH₃ ou -OC₂H₅; de préférence X¹ et X² sont -OC₂H₅,
   - q et q' sont égaux à 0 ou 1, et de préférence sont nuls
c) une étape de dépôt sur ladite deuxième couche d'un revêtement à propriétés hydrophobes et comprenant des groupements fluorés.

Par exemple, la première couche de SiO₂ peut comprendre entre 1 et 10 % molaire d'Al.

Selon l'invention, la première couche de primage dense peut être déposée par toute technique connue à cet effet, notamment les techniques de magnétron, les techniques de dépôt du type CVD thermique, PE-CVD ou encore plasma sous vide ou atmosphérique. D'autres techniques sont bien entendu possible, pourvu qu'elles permettent le dépôt d'une couche suffisamment dense au sens de la présente invention. Optionnellement, la sous couche dense peut selon l'invention également subir une opération de gravure pour en augmenter la rugosité, selon les principes décrits dans la demande WO 2005/084943, notamment pour l'obtention d'une rugosité RMS de ladite couche comprise entre 1 et 30 nm.

Selon un mode de l'invention, le revêtement hydrophobe comprend ou est constitué par au moins un alkylsilane fluoré.

Par exemple, l'étape de dépôt du revêtement hydrophobe est mise en oeuvre à partir d'une solution comprenant un perfluoroalkylsilane de formule :

**F₃C-(CF₂)ₘ-(CH₂)ₙ-Si(X)₃₋ₚ(R)ₚ**

dans laquelle :
- m = 0 à 15, de préférence 3 à 7;
- n = 1 à 5, de préférence n = 2
- p = 0, 1 ou 2, de préférence 0 ou 1, de manière très préférée 0;
- R est un groupe alkyle ou un atome d'hydrogène ; et
- X est un groupement hydrolysable tel qu'un groupement halogénure ou un groupement alkoxy.

L'invention se rapporte également à un substrat verrier, céramique, vitrocéramique, de préférence verrier, susceptible d'être obtenu par le procédé précédemment décrit.

Ledit substrat est revêtu d'un revêtement hydrophobe, ledit revêtement comprenant trois couches :
- une première couche de primage du matériau SiO₂ comprenant éventuellement un élément du groupe constitué par Al, B, C ou Zr, la densité de ladite couche étant d'au moins 1,9 g/cm³ et de préférence d'au moins 2,0 g/cm³, directement appliquée sur ledit substrat,
- une deuxième couche de primage, directement appliquée sur la première couche de primage, comprenant des groupements Si-R³-Si, R³ étant choisi dans le groupe constitué par les chaînes alkyls linéaires, ramifiées, ou aromatiques, de préférence linéaires, dans lesquels le nombre de carbones établissant la liaison entre les deux atomes de silicium est inférieur à 6 et de préférence est compris entre 1 et 4, bornes incluses,
- une couche de revêtement à propriétés hydrophobes en liaison avec ladite couche de primage, comprenant des groupements fluorés.
Par le nombre de carbones établissant la liaison entre deux atomes de silicium, on entend, au sens de la présente description, le plus petit nombre d'atomes de carbone permettant la plus petite jonction linéaire entre deux atomes de silicium et non le nombre total des atomes de carbone placés entre les deux siliciums. Cette définition est notamment pertinente lorsqu'un groupement ramifié ou à cycle aromatique est présent entre ceux-ci.

Par exemple, la première couche de SiO₂ peut comprendre entre 1 et 10 % molaire d'Al. Selon l'invention, ladite couche peut avoir été gravée comme décrit précédemment, de telle façon que sa rugosité RMS soit comprise entre 1 et 30 nm.

Selon un mode de réalisation possible de l'invention, la couche de revêtement à propriétés hydrophobes comprend ou est constituée par un alkylsilane à extrémité perfluorée hydrophobe.

Notamment, ledit alkylsilane à extrémité perfluorée peut être du type représenté par la formule générale:

**F₃C-(CF₂)ₘ-(CH₂)ₙ-Si**

avec :
- m = 0 à 15, de préférence 3 à 7;
- n = 1 à 5, de préférence n = 2.

Typiquement, l'épaisseur de la couche à propriétés hydrophobes est comprise entre 1 et 100 nm, de préférence entre 1 nm et 10 nm.

Avantageusement l'épaisseur de la première couche de primage dense peut être comprise entre 1 nm et 100 nm, de préférence entre 2 nm et 80 nm.

Par exemple, l'épaisseur de la deuxième couche de primage du type bis-silane peut être comprise entre 1 et 15 nm, de préférence entre 2 et 10 nm.

Le produit de l'invention est par exemple un vitrage monolithique, feuilleté ou multiple.

Il est précisé que l'on entend :
Par " vitrage monolithique ", un vitrage constitué d'une unique feuille de verre;
Par " vitrage feuilleté ", un empilement de plusieurs feuilles solidaires les unes des autres, par exemple de feuilles de verre ou de matière plastique fixées les unes aux autres au moyen de couches adhésives de polyvinylbutyral, polyuréthane... ; et
Par " vitrage multiple ", un assemblage de feuilles disjointes, c'est-à-dire notamment séparées les unes des autres par des couches d'air.

L'intérêt du revêtement hydrophobe de l'invention pour ce type de produits est double. Tout d'abord, il permet l'écoulement de gouttes d'eau ou autre liquide sur des surfaces verticales ou inclinées, éventuellement sous l'effet de forces aérodynamiques par exemple dans le cas d'un véhicule en mouvement. De plus, ces gouttes qui s'écoulent englobent des salissures et les entraînent. La visibilité à travers le vitrage est améliorée à un degré tel que l'on puisse se dispenser dans certains cas de dispositifs de nettoyage (lave-vitres, essuie-glaces).

Enfin, l'invention a également pour objet les applications du produit décrit précédemment :
- en tant que vitrage pour véhicule de transport (vitres latérales automobiles, pare-brise aviation ou automobile) ou pour le bàtiment ;
- en tant que plaque de cuisson vitrocéramique, porte de four ;
- en tant qu'élément de mobilier urbain, notamment comme élément d'abribus ; et
- en tant qu'élément mobilier, notamment comme miroir, tablette de rangement, tablette pour appareil électroménager tel que réfrigérateur, élément de cabine de douche, cloison ;
- en tant qu'écran, notamment écran de télévision, écran tactile, écran plasma.

Les exemples suivants servent à illustrer l'invention sans toutefois en limiter la portée, sous aucun des aspects décrits.

Dans ces exemples, tous les pourcentages sont donnés en masse.

### EXEMPLE 1 (selon l'art antérieur)

Selon cet exemple un premier échantillon E1 conforme à l'enseignement de la demande WO2007/012779 est préparé.

Plus précisément, 0,3% de bis(triéthoxysilyl)éthane (C₂H₅O)₃Si(CH₂)₂Si(OC₂H₅)₃ est additionné à une solution comprenant 90% d'isopropanol et 10% d'acide chlorhydrique 0,3 N.

Parallèlement, une solution à 3% de perfluorodécyltriéthoxysilane CF₃(CF₂)₇(CH₂)₂Si(OC₂H₅)₃ dans un mélange isopropanol (90%) / acide chlorhydrique 0,3 N (10%) est préparée. Les deux solutions sont maintenues sous agitation pendant 1 heure.

Selon une première étape de dépôt, la solution à base de bis(triéthoxysilyl)éthane est d'abord déposée par chiffonnage (4 passes croisées) sur un substrat de verre préalablement poli à l'aide d'une solution d'oxyde de cérium puis abondamment rincé à l'eau déminéralisée. L'épaisseur de la couche de primage ainsi obtenue est d'environ 7 nm.

Dès que le dépôt de la sous-couche est achevé, la solution de perfluorodécyltriéthoxysilane est à son tour déposée par la même technique de chiffonnage. Dans cet exemple et dans les suivants, le dépôt des couches à propriétés hydrophobes du type perfluoroalkylsilane est effectué par la technique bien connue du chiffonnage, selon laquelle le matériau ou son précurseur est déposé par l'intermédiaire d'un chiffon imbibé. Bien entendu, on ne sortirait cependant pas du cadre de l'invention si le dépôt était mis en oeuvre par toute autre technique connue à cette fin dans le domaine, en particulier par pulvérisation, qui permet par ailleurs un meilleur contrôle de l'épaisseur des couches, par centrifugation, selon des procédés connus dans le métier sous le terme anglais spin-coating, par trempage (procédés souvent appelés dip-coating) ou encore par arrosage (procédés souvent appelés flow-coating).

Après 15 minutes d'attente à température ambiante, l'excédent de fluorosilane est éliminé par un nettoyage à l'isopropanol. L'épaisseur de la couche hydrophobe obtenue est d'environ 8 nm.

### EXEMPLE 2 (selon l'art antérieur):

Selon cet exemple un deuxième échantillon E2 conforme à l'enseignement de la publication EP 944 687 est préparé.

Les mêmes étapes que précédemment décrites pour l'exemple 1 sont reproduites pour la préparation du second échantillon E2, mais le substrat verrier est cette fois traité par une solution de primage de Si(OC₂H₅)₄ à 0,3 % dans une solution de 90% d'isopropanol et 10 % d'eau, au cours de la première étape de dépôt. La densité de la sous-couche en silice ainsi obtenue est d'environ 1,4 g/cm³.

Le substrat ainsi revêtu de la sous-couche est alors mis en contact par la technique du chiffonnage, à température ambiante, avec une solution à 3 % de CF₃(CF₂)₇(CH₂)₂Si(OC₂H₅)₃ dans un mélange de 90 % d'isopropanol et 10 % d'eau acidifiée par HCl à 0,3 N. Après 15 minutes d'attente à température ambiante, l'excédent de fluorosilanes est éliminé par un nettoyage à l'isopropanol. L'épaisseur de la couche hydrophobe obtenue est d'environ 6 nm.

### EXEMPLE 3 :

Un troisième échantillon E3 est préparé comprenant uniquement une sous couche dense de silice SiO₂ comprenant 8% molaire d'Aluminium, déposée par magnétron haute pression.

Dans un premier temps, le substrat verrier est introduit dans la chambre sous vide d'un dispositif magnétron de manière à déposer à sa surface une couche dense de silice d'épaisseur 5 nm et de densité proche de 2,0 g/cm³.

Plus précisément les conditions du dépôt magnétron sont les suivantes : on utilise une cible de dimension 56 x 12,5 cm², contenant 92% poids de silicium et 8% d'aluminium. La pression dans l'enceinte utilisée pour le dépôt est fixée à 8 µbar (200 Pascals) avec des débits de gaz de 15 sccm d'argon et de 12 sccm de dioxygène.

Le plasma est allumé en augmentant la puissance DC de 0 à 2000 W à raison de 20 W/s. La pulvérisation de la cible est effectuée, consistant à appliquer pendant 3 minutes une puissance de 2000W avec des pulsations de 40 kHz et 4 µs entre les pulses.

La vitesse de défilement du substrat sous la cible est ajustée pour l'obtention d'une épaisseur de 5 nanomètres de la couche dense de SiO₂.

La surface de la silice dense est rincée par une solution basique de NH3 à pH = 10 juste avant que le substrat muni de son primage en silice dense ne soit mis en contact à température ambiante avec la même solution de CF₃(CF₂)₇(CH₂)₂Si(OC₂H₅)₃ que précédemment décrite. Une couche à propriétés hydrophobes est obtenue de façon similaire à celle déjà décrite dans les exemples 1 et 2 précédents.

### EXEMPLE 4 (comparatif):

Dans cet exemple, on a déposé sur le substrat un premier revêtement hydrophobe présentant deux sous-couches.

Plus précisément, on dépose d'abord un premier primage constitué par une sous-couche dense de silice de 5 nm selon le protocole décrit dans l'exemple 3. Dans un deuxième temps, la surface de la silice dense est rincée par une solution basique de NH₃ à pH = 10, et on dépose par chiffonnage, sur la première couche de primage, une deuxième couche obtenue à partir de la solution de primage de Si(OC₂H₅)₄ à 0,3 % dans une solution de 90% d'isopropanol et 10 % d'eau acidifiée décrite dans l'exemple 2. La densité de la deuxième couche de silice ainsi obtenue est d'environ 1,4.

Le substrat et son double primage de silice sont alors mis en contact à température ambiante avec la même solution de CF₃(CF₂)₇(CH₂)₂Si(OC₂H₅)₃ que précédemment décrite, et une couche à propriétés hydrophobes est obtenue de façon similaire à celle déjà décrite dans les exemples précédents.

### EXEMPLE 5 (selon l'invention):

Dans cet exemple, on a déposé sur le substrat un deuxième revêtement hydrophobe selon l'invention présentant deux sous-couches de primage.

Plus précisément, on dépose d'abord un premier primage constitué par une sous-couche dense de silice de 5 nm selon le protocole précédemment décrit dans l'exemple 3. Dans un deuxième temps, la surface de la silice dense est rincée par une solution basique de NH₃ à pH = 10, et on dépose par chiffonnage, sur la première couché de primage, un deuxième primage obtenu à partir de la solution à base de bis(triéthoxysilyl)éthane précédemment décrite, selon un protocole identique à celui déjà décrit dans l'exemple 1 ci-dessus.

Le substrat et son double primage (silice dense + bis-silane) sont alors mis en contact à température ambiante avec la même solution de CF₃(CF₂)₇(CH₂)₂Si(OC₂H₅)₃ que précédemment décrite et une couche à propriétés hydrophobes est obtenue, de façon similaire à celle déjà décrite dans les exemples précédents.

On évalue les cinq échantillons E1 à E5 préparés respectivement selon les exemples 1 à 5 selon les critères suivants :
1°) La mesure de l'angle de contact initial de l'eau avec le substrat verrier, qui fournit une indication de référence des propriétés hydrophobes du substrat greffé.
2°) La résistance à l'abrasion, obtenue par la mesure de l'angle de contact résiduel de l'eau sur l'échantillon après que le revêtement hydrophobe greffé sur le substrat ait subi une abrasion suivant le test de friction Opel®, mené sur les échantillons avec un feutre de dureté H1, une charge de 0,4 kg/cm² sur une surface de 1,5 cm², avec une vitesse de translation de 50 cycles/minute et une vitesse de rotation de 6 tours/minute. Un échantillon est jugé satisfaisant au test si l'angle de contact reste supérieur à 90° après 5000 cycles.
3°) la résistance au rayonnement UV-A, mesurée par des tests d'illumination en continu des échantillons par une lampe au Xénon émettant un rayonnement UV dont l'éclairement intégré entre 300 et 400 nm est de 60 W/m². Un échantillon est jugé satisfaisant au test si l'angle de contact reste supérieur à 90° après 2000 heures d'exposition. 4°) la résistance à la corrosion saline, mesurée par le test Brouillard Salin Neutre (BSN) tel que décrit selon la norme NF ISO 9227. Le test consiste en une pulvérisation sur des échantillons inclinés à 20° par rapport à la verticale de fines gouttelettes d'eau saline (solution NaCl à 50g/L de pH = 7) à une température de 35°C. L'angle de contact est ensuite mesuré. La norme la plus sévère en vigueur à l'heure actuelle pour une application sur des vitres latérales automobiles exige un angle de contact de l'eau supérieur à 70° après 300 heures de test.

Les résultats obtenus pour les échantillons préparés conformément aux exemples 1 à 5 sont reportés dans le tableau 1 ci-dessous:

**Tableau 1**

| Exemple / Echantillon | Angle de contact initial | Angle après test Opel | Angle après test UVA | Angle après test BSN | | |
|---|---|---|---|---|---|---|
| | | | | 2 jours | 7 jours | 18 jours |
| E1 (art antérieur) | 112° | > 95° | > 90° | 100° | 89° | <70° |
| E2 (art antérieur) | 111° | > 95° | > 90° | <70° | - | - |
| E3 (comparatif) | 113° | > 95° | > 90° | 108° | 107° | 94° |
| E4 (comparatif) | 114° | > 95° | > 90° | 94° | 94° | 77° |
| E5 (invention) | 114° | > 95° | > 90° | 114° | 109° | 104° |

La comparaison des données reportées dans le tableau 1 montre que la présence d'une ou plusieurs sous-couches de primage conduit à des propriétés hydrophobes initiales de la surface traitée comparables pour tous les échantillons.

De même les propriétés de résistance à l'abrasion et aux UV sont sensiblement identiques et conformes aux normes, comme le montrent les résultats obtenus pour les tests Opel® et UV sur les différents échantillons.

L'échantillon E5 selon l'invention, comprenant deux sous-couches de primage, une première en silice dense et une seconde constituée par des bis-silanes, montre une résistance à la corrosion saline, mesurée par le test BSN, très supérieure à celle des revêtements des échantillons E1 et E2 caractéristiques des substrats hydrophobes connus jusqu'à présent. En outre, le choix de mettre en oeuvre deux sous-couches selon l'invention, une première en silice dense et une seconde constituée par des bis-silanes, amène de façon surprenante à des revêtements présentant des résistances hydrolytiques étonnamment élevées comme il est reporté dans le tableau 1.

### EXEMPLES 6 à 8:

Dans une deuxième série d'expériences, on a repris le protocole expérimental décrit précédemment respectivement dans les exemples 3 à 5, mais on a laissé le substrat verrier dans la chambre sous vide du dispositif magnétron pendant un temps permettant de déposer à sa surface une couche dense de silice d'épaisseur 100 nm.

Mise à part cette différence, le protocole expérimental utilisé pour l'obtention de l'échantillon selon l'exemple 6 est identique en tous points à celui déjà décrit dans l'exemple 3, le protocole expérimental utilisé pour l'obtention de l'échantillon selon l'exemple 7 est identique en tous points à celui déjà décrit dans l'exemple 4 et le protocole expérimental utilisé pour l'obtention de l'échantillon selon l'exemple 8 est identique en tous points à celui déjà décrit dans l'exemple 5.

Les résultats obtenus pour les différents tests sont reportés dans le tableau 2 :

**Tableau 2**

| Echantillon | Angle de contact initial | Angle après test Opel | Angle après test UVA | Angle après test BSN | | |
|---|---|---|---|---|---|---|
| | | | | 2 jours | 7 jours | 18 jours |
| E6 (comparatif) | 114° | > 95° | > 90° | 114° | 102° | 95° |
| E7 (comparatif) | 114° | > 95° | > 90° | 102° | 87° | 75° |
| E8 (invention) | 113° | > 95° | > 90° | 113° | 110° | 105° |

On remarque là encore que l'échantillon E8 selon l'invention présente une résistance hydrolytique très supérieure, en particulier aux plus longues durées d'exposition au Brouillard Salin Neutre.. Tout comme pour la série d'échantillons précédente, les données reportées sur le tableau 2 montrent que le choix de mettre en oeuvre deux sous-couches selon l'invention, une première en silice dense et une seconde incorporant des bis-silanes, amène de façon surprenante à des revêtements présentant des résistances hydrolytiques étonnamment élevées. En outre, la comparaison des exemples E5 et E8 selon l'invention montre que les performances de résistance hydrolytique améliorées selon l'invention peuvent être obtenues avec des épaisseurs extrêmement faibles en les différentes couches, en particulier la première couche de primage en silice dense. En particulier, des épaisseurs de l'ordre de quelques nanomètres, par exemple de 2 à 20 nm ou même de 2 à 10 nm de la sous-couche de silice dense s'avèrent suffisantes pour l'obtention d'une résistance hydrolytique très améliorée, ce qui permet de limiter de façon avantageuse le coût industriel d'un dépôt sur le substrat de deux couches successives de primage selon l'invention.

## Revendications

1. Procédé d'obtention d'un revêtement hydrophobe sur un substrat verrier, céramique, ou vitrocéramique, de préférence verrier, ledit procédé **se caractérisant en ce qu'**il comprend :
a) une première étape consistant à déposer sur ledit substrat une première couche d'oxyde de silicium SiO₂ comprenant éventuellement un élément du groupe constitué par Al, B, C ou Zr, la densité de ladite couche étant d'au moins 1,9 g/cm³ et de préférence d'au moins 2,0 g/cm³,
b) une deuxième étape consistant à appliquer sur ladite couche de primage dense une deuxième couche de primage obtenue à partir d'un agent de primage du type bis-silane et de formule :
**(X¹)_{3-q}(R¹)_{q}Si-R³-Si(X²)_{3-q'}(R²)_{q'}**
dans laquelle
- Si est le silicium ;
- R³ représente une chaîne carbonée linéaire, ramifiée, ou aromatique, de préférence linéaire, dans lequel le nombre de carbones établissant la liaison entre les deux atomes de silicium est inférieur à 6 et de préférence est compris entre 1 et 4, bornes incluses;
- R¹ et R² représentent chacun un groupe alkyle ou un atome d'hydrogène ;
- X¹ et X² sont des groupements hydrolysables,
- q et q' sont égaux à 0 ou 1 et de préférence sont nuls et
c) une étape de dépôt sur ladite deuxième couche d'un revêtement à propriétés hydrophobes et comprenant des groupements fluorés.

2. Procédé selon la revendication 1, dans lequel le revêtement hydrophobe comprend au moins un alkylsilane fluoré.

3. Procédé selon l'une des revendications 1 ou 2, dans lequel X¹ et X² sont des groupements alkoxy, de préférence méthoxy ou éthoxy, ou des groupements halogénures.

4. Procédé selon l'une des revendications précédentes, **caractérisé en ce que** l'étape de dépôt du revêtement hydrophobe est mise en oeuvre à partir d'une solution comprenant un perfluoroalkylsilane de formule :
**F₃C-(CF₂)ₘ-(CH₂)ₙ-Si(X)₃₋ₚ(R)ₚ**
dans laquelle :
- m = 0 à 15, de préférence 3 à 7;
- n = 1 à 5, de préférence n = 2
- p = 0, 1 ou 2, de préférence 0 ou 1, de manière très préférée 0;
- R est un groupe alkyle ou un atome d'hydrogène ; et
- X est un groupement hydrolysable tel qu'un groupement halogénure ou un groupement alkoxy.

5. Substrat verrier, céramique, vitrocéramique, de préférence verrier, revêtu d'un revêtement hydrophobe comprenant:
- une première couche de primage d'oxyde de silicium SiO₂ comprenant éventuellement un élément du groupe constitué par Al, B, C ou Zr, la densité de ladite couche étant d'au moins 1,9 g/ cm³ et de préférence d'au moins 2,0 g/cm³,
- une deuxième couche de primage comprenant dès groupements Si-R³-Si, R³ étant choisi dans le groupe constitué par les chaînes alkyls linéaires, ramifiées, ou aromatiques, de préférence linéaires, dans lesquels le nombre de carbones établissant la liaison entre les deux atomes de silicium est inférieur à 6 et de préférence est compris entre 1 et 4, bornes incluses,
- une couche de revêtement à propriétés hydrophobes en liaison avec ladite deuxième couche de primage, comprenant des groupements fluorés.

6. Substrat comprenant un revêtement hydrophobe selon la revendication 5 dans lequel la couche de revêtement à propriétés hydrophobes comprend ou est constituée par un alkylsilane à extrémité perfluorée hydrophobe.

7. Substrat comprenant un revêtement hydrophobe selon la revendication 6, dans lequel ledit alkylsilane à extrémité perfluorée est du type représenté par la formule générale:
**F₃C-(CF₂))ₘ-(CH₂)ₙ-Si**
avec :
- m = 0 à 15, de préférence 3 à 7;
- n = 1 à 5, de préférence n = 2.

8. Substrat comprenant un revêtement hydrophobe selon l'une des revendications 5 à 7, dans lequel l'épaisseur de la couche à propriétés hydrophobes est comprise entre 1 et 100 nm, de préférence entre 1 et 10 nm.

9. Substrat comprenant un revêtement hydrophobe selon l'une des revendications 5 à 8, dans lequel l'épaisseur de la première couche de primage dense est comprise entre 1 et 100 nm, de préférence entre 2 et 50 nm.

10. Substrat comprenant un revêtement hydrophobe selon l'une des revendications 5 à 9, dans lequel l'épaisseur de la deuxième couche de primage du type bis-silane est comprise entre 1 et 15 nm, de préférence entre 5 et 10 nm.

11. Produit verrier comprenant un substrat verrier selon l'une des revendications 5 à 10 et consistant en un vitrage monolithique, feuilleté ou multiple.

## Patentansprüche

1. Verfahren zum Erhalt eines hydrophoben Überzugs auf einem Glas-, Keramik- oder Glaskeramik-, vorzugsweise Glassubstrat, wobei das Verfahren **dadurch gekennzeichnet ist, dass** es umfasst:
a) einen ersten Schritt, der darin besteht, auf dem Substrat eine erste Schicht aus Siliziumoxid SiO₂, die eventuell ein Element aus der Gruppe bestehend aus Al, B, C oder Zr umfasst, abzuscheiden, wobei die Dichte der Schicht wenigstens 1,9 g/cm³ und vorzugsweise wenigstens 2,0 g/cm³ beträgt,
b) einen zweiten Schritt, der darin besteht, auf die dichte Grundierungsschicht eine zweite Grundierungsschicht aufzutragen, die anhand eines Grundierungsmittels vom Typ Bis-Silan und der folgenden Formel erhalten wird:
**(X¹)_{3-q}(R¹)_{q}SiR³-Si(X²)_{3-q'}(R²)_{q'}**
worin
- Si Silizium ist;
- R³ eine lineare, verzweigte oder aromatische, vorzugsweise lineare Kohlenstoffkette bedeutet, wobei die Anzahl der die Bindung zwischen den beiden Siliziumatomen herstellenden Kohlenstoffe kleiner als 6 ist und vorzugsweise zwischen 1 und einschließlich 4 liegt;
- R¹ und R² jeweils eine Alkylgruppe oder ein Wasserstoffatom bedeuten;
- X¹ und X² hydrolysierbare Gruppen sind,
- q und q' gleich 0 oder 1 und vorzugsweise null sind und
c) einen Schritt zum Abscheiden, auf der zweiten Schicht, eines Überzugs mit hydrophoben Eigenschaften und mit fluorierten Gruppen.

2. Verfahren nach Anspruch 1, wobei der hydrophobe Überzug wenigstens ein Fluoralkylsilan umfasst.

3. Verfahren nach einem der Ansprüche 1 oder 2, wobei X¹ und X² Alkoxy-, vorzugsweise Methoxy- oder Ethoxygruppen oder Halogenidgruppen sind.

4. Verfahren nach einem der vorhergehenden Ansprüche, **dadurch gekennzeichnet, dass** der Schritt des Abscheidens des hydrophoben Überzugs anhand einer Lösung durchgeführt wird, die ein Perfluoralkylsilan der folgenden Formel umfasst:
**F₃C-(CF₂)ₘ-(CH₂)ₙ-Si(X)₃₋ₚ(R)ₚ**
worin:
- m = 0 bis 15, vorzugsweise 3 bis 7 ist;
- n = 1 bis 5, vorzugsweise n = 2 ist;
- p = 0, 1 oder 2, vorzugsweise 0 oder 1, sehr bevorzugt 0 ist;
- R eine Alkylgruppe oder ein Wasserstoffatom ist; und
- X eine hydrolysierbare Gruppe, wie eine Halogenidgruppe oder eine Alkoxygruppe ist.

5. Glas-, Keramik-, Glaskeramik-, vorzugsweise Glassubstrat, das mit einem hydrophoben Überzug überzogen ist, umfassend:
- eine erste Grundierungsschicht aus Siliziumoxid SiO₂, die eventuell ein Element aus der Gruppe bestehend aus Al, B, C oder Zr umfasst, wobei die Dichte der Schicht wenigstens 1,9 g/cm³ und vorzugsweise wenigstens 2,0 g/cm³ beträgt,
- eine zweite Grundierungsschicht, die Si-R³ -Si-Gruppen umfasst, wobei R³ aus der Gruppe bestehend aus den linearen, verzweigten oder aromatischen, vorzugsweise linearen Alkylketten ausgewählt ist, wobei die Anzahl der die Bindung zwischen den beiden Siliziumatomen herstellenden Kohlenstoffe kleiner als 6 ist und vorzugsweise zwischen 1 und einschließlich 4 liegt,
- eine Überzugsschicht mit hydrophoben Eigenschaften in Verbindung mit der zweiten Grundierungsschicht, umfassend fluorierte Gruppen.

6. Substrat, umfassend einen hydrophoben Überzug nach Anspruch 5, wobei die Überzugsschicht mit hydrophoben Eigenschaften ein Alkylsilan mit hydrophobem perfluoriertem Ende umfasst oder dadurch gebildet ist.

7. Substrat, umfassend einen hydrophoben Überzug nach Anspruch 6, wobei das Alkylsilan mit perfluoriertem Ende vom Typ, dargestellt durch die allgemeine Formel, ist:
**F³C-(CF₂)ₘ-(CH₂)ₙ-Si**
mit:
- m = 0 bis 15, vorzugsweise 3 bis 7;
- n = 1 bis 5, vorzugsweise n = 2.

8. Substrat, umfassend einen hydrophoben Überzug nach einem der Ansprüche 5 bis 7, wobei die Dicke der Schicht mit hydrophoben Eigenschaften zwischen 1 und 100 nm, vorzugsweise zwischen 1 und 10 nm beträgt.

9. Substrat, umfassend einen hydrophoben Überzug nach einem der Ansprüche 5 bis 8, wobei die Dicke der ersten dichten Grundierungsschicht zwischen 1 und 100 nm, vorzugsweise zwischen 2 und 50 nm beträgt.

10. Substrat, umfassend einen hydrophoben Überzug nach einem der Ansprüche 5 bis 9, wobei die Dicke der zweiten Grundierungsschicht vom Typ Bis-Silan zwischen 1 und 15 nm, vorzugsweise zwischen 5 und 10 nm beträgt.

11. Glasprodukt, das ein Glassubstrat nach einem der Ansprüche 5 bis 10 umfasst und aus einer monolithischen, Verbund- oder Mehrfachverglasung besteht.

## Claims

1. A process for obtaining a hydrophobic coating on a glass, ceramic or glass-ceramic substrate, preferably a glass substrate, said process being **characterized in that** it comprises:
a) a first step that consists in depositing on said substrate a first layer of silicon oxide SiO₂ optionally comprising an element from the group formed by Al, B, C or Zr, the density of said layer being at least 1.9 g/cm³ and preferably at least 2.0 g/cm³;
b) a second step that consists in applying to said dense priming layer, a second priming layer obtained from a priming agent of the bis-silane type and of formula:
(X¹)_{3-q}(R¹)_{q}Si-R³-Si(X²)_{3-q'} (R²)_{q'}
in which:
- Si is silicon;
- R³ represents a linear, branched or aromatic carbon chain, preferably a linear carbon chain, in which the number of carbons forming the bond between the two silicon atoms is less than 6 and is preferably between 1 and 4, limits included;
- R¹ and R² each represent an alkyl group or a hydrogen atom;
- X¹ and X² are hydrolysable groups;
- q and q' are equal to 0 or 1 and are preferably 0; and
c) a step of depositing, on said second layer, a coating with hydrophobic properties and comprising fluorinated groups.

2. The process as claimed in claim 1, in which the hydrophobic coating comprises at least one fluorinated alkylsilane.

3. The process as claimed in either of claims 1 and 2, in which X¹ and X² are alkoxy groups, preferably methoxy or ethoxy groups, or halide groups.

4. The process as claimed in one of the preceding claims, **characterized in that** the step of depositing the hydrophobic coating is carried out starting from a solution comprising a perfluoroalkylsilane of formula:
F₃C-(CF₂)ₘ-(CH₂)ₙ-Si(X)₃₋ₚ(R)ₚ
in which:
- m = 0 to 15, preferably 3 to 7;
- n = 1 to 5, preferably n = 2;
- p = 0, 1 or 2, preferably 0 or 1, very preferably 0;
- R is an alkyl group or a hydrogen atom; and
- X is a hydrolysable group such as a halide group or an alkoxy group.

5. A glass, ceramic or glass-ceramic substrate, preferably a glass substrate, coated with a hydrophobic coating comprising:
- a first silicon oxide SiO₂ priming layer optionally comprising an element from the group formed by Al, B, C or Zr, the density of said layer being at least 1.9 g/cm³ and preferably at least 2.0 g/cm³;
- a second priming layer comprising Si-R³-Si groups, R³ being chosen from the group consisting of linear, branched or aromatic alkyl chains, preferably linear alkyl chains, in which the number of carbons forming the bond between the two silicon atoms is less than 6 and is preferably between 1 and 4, limits included;
- a coating layer having hydrophobic properties in contact with said second priming layer, comprising fluorinated groups.

6. The substrate comprising a hydrophobic coating as claimed in claim 5, in which the coating layer having hydrophobic properties comprises or is composed of an alkylsilane with a hydrophobic perfluorinated end group.

7. The substrate comprising a hydrophobic coating as claimed in claim 6, in which said alkylsilane with a perfluorinated end group is of the type represented by the general formula:
F₃-C(CF₂)ₘ-(CH₂)ₙ-Si
with:
- m = 0 to 15, preferably 3 to 7; and
- n = 1 to 5, preferably n = 2.

8. The substrate comprising a hydrophobic coating as claimed in one of claims 5 to 7, in which the thickness of the layer having hydrophobic properties is between 1 and 100 nm, preferably between 1 and 10 nm.

9. The substrate comprising a hydrophobic coating as claimed in one of claims 5 to 8, in which the thickness of the first dense priming layer is between 1 and 100 nm, preferably between 2 and 50 nm.

10. The substrate comprising a hydrophobic coating as claimed in one of claims 5 to 9, in which the thickness of the second priming layer of bis-silane type is between 1 and 15 nm, preferably between 5 and 10 nm.

11. A glass product comprising a glass substrate as claimed in one of claims 5 to 10, and consisting of monolithic, laminated or multiple glazing.
